# EUROPEAN PATENT APPLICATION

(11) **EP 4 333 562 A1**
(43) Date of publication of application: **06.03.2024**
(21) Application number: 21939444.2
(22) Date of filing: 13.07.2021
(51) Int. Cl.: H05B 6/12, H05B 6/06

(54) **INDUCTION HEATING TYPE COOKTOP**

(30) Priority: 30.04.2021 KR 20210056714
(71) Applicant: LG Electronics Inc., Yeongdeungpo-gu Seoul 07336 (KR)
(72) Inventor: KWACK, Younghwan, Seoul 08592 (KR); SON, Seongho, Seoul 08592 (KR); LEE, Yongsoo, Seoul 08592 (KR); YANG, Jaekyung, Seoul 08592 (KR)
(74) Representative: Vossius & Partner Patentanwälte Rechtsanwälte mbB
(86) International application number: PCT/KR2021/008960
(87) International publication number: WO 2022/231065

(57) **Abstract**

An induction heating type cooktop according to an embodiment of the present disclosure comprises: an upper part on which an object to be heated is placed; an intermediate heating element installed on the upper plate; a first working coil and a second working coil for generating a magnetic field passing through at least the object to be heated or the intermediate heating element; and an inverter unit for controlling a first direction of a first current flowing through the first working coil and a second direction of a second current flowing through the second working coil, wherein according to the type of the object to be heated, the area of a loop formed by the current induced by the intermediate heating element may be changed.

## Description

### TECHNICAL FIELD

The present disclosure relates to an induction heating type cooktop. More particularly, the present disclosure relates to an induction heating type cooktop, which can heat a magnetic body and a non-magnetic body.

### BACKGROUND ART

Various types of cooking appliances are used to heat food at home or in the restaurant. According to the related art, a gas stove using gas as a fuel source has been widely used. However, recently, devices for heating an object to be heated, for example, a cooking container such as a pot, by using electricity instead of gas have been more widely used.

A method for heating the object to be heated using electricity is largely divided into a resistance heating method and an induction heating method. The electrical resistance method is a method for heating an object to be heated by transferring heat generated when electric current flows through a metal resistance wire or a non-metal heating element such as silicon carbide to the object to be heated (e.g., a cooking container) through radiation or conduction. In the induction heating method, when high-frequency power having a predetermined intensity is applied to a coil, eddy currents are generated in the object to be heated using magnetic fields generated around the coil so that the object is heated.

Recently, most of the induction heating methods are applied to cooktops.

However, in a cooktop that uses induction heating, there is a limitation in that only a magnetic body is heated. For example, when a non-magnetic body (e.g., heat-resistant glass, ceramics, etc.) is disposed on the cooktop, there is a problem that the the induction heating cooktop does not heat the object.

To improve the limitation of the induction heating type cooktop, the cooktop may include an intermediate heating element to which eddy currents are applied, and the non-magnetic body may be heated through the intermediate heating element. However, this intermediate heating element has a limitation in that a skin depth has to be thicker than a thickness **of** intermediate heating element. In addition, even when the magnetic body is heated, there is a limitation in that heating efficiency is deteriorated because a portion of the magnetic fields couple with the intermediate heating element, and when the intermediate heating element is designed so that the coupling force between the coil and the intermediate heating element is reduced to improve the heating efficiency for the magnetic body, there is a limitation that heat output to the non-magnetic body is very low or inefficient.

### DISCLOSURE OF THE INVENTION

### TECHNICAL PROBLEM

An aspect of the present disclosure is directed to an induction heating type cooktop, which is capable of heating both of a magnetic body and a non-magnetic body.

An aspect of the present disclosure minimizes restrictions on a material, shape, etc. of an intermediate heating element through which eddy current is induced to heat a non-magnetic body.

An aspect of the present disclosure is directed to an induction heating type cooktop that improves heating efficiency for a magnetic body and increases in minimum output for a non-magnetic body.

An aspect of the present disclosure minimizes a limitation in which an upper plate is overheated by an intermediate heating element while heating a magnetic body.

### TECHNICAL SOLUTION

An aspect of the present disclosure is directed to an induction heating type cooktop that can be configured to change the distribution of magnetic fields generated in a working coil according to the type of cooking container.

An aspect of the present disclosure is directed to an induction heating type cooktop that can be configured to adjust an area of a loop generated by current induced in an intermediate heating element according to the type of cooking container.

An aspect of the present disclosure is directed to an induction heating type cooktop that can include a plurality of working coils to control a direction of current flowing through the plurality of cooking coils, thereby adjusting an area of a loop generated in the intermediate heating element.

An aspect of the present disclosure is directed to an induction heating type cooktop configured to change magnetic field distribution so that when heating a magnetic body, magnetic fields are concentrated to a cooking container, and when heating a non-magnetic body, the magnetic fields are concentrated to the intermediate heating element.

An induction heating type cooktop according to an embodiment of the present disclosure includes an upper plate on which an object to be heated is placed, an intermediate heating element installed on the upper plate, a first working coil and a second working coil configured to generate magnetic fields passing through at least the object to be heated or the intermediate heating element, and an inverter configured to control a first direction of first current flowing through the first working coil and a second direction of second current flowing through the second working coil, in which an area of a loop generated by current induced by the intermediate heating element can vary according to types of the object to be heated.

A first area of the loop generated in the intermediate heating element when the object to be heated is a magnetic body can be less than a second area of a loop generated in the intermediate heating element when the object to be heated is a non-magnetic body.

The inverter can be configured to control the first direction and the second direction of the current so that the size of the loop is changed.

A first size of the loop generated in the intermediate heating element when the first direction of the first current and the second direction of the second current are different from each other can be less than a second size of the loop generated in the intermediate heating element when the first direction of the first current and the second direction of the second current are the same.

The inverter can be driven so that the first direction of the first current and the second direction of the second current are different from each other when the object to be heated is a magnetic body and so that the first direction and the second direction of the currents are the same when the object to be heated is a non-magnetic body.

The first working coil and the second working coil can be disposed side by side, and the intermediate heating element has a ring shape.

A plurality of grooves can be defined around a hole defined at a central portion of the intermediate heating element.

One of the first working coil and the second working coil can be disposed inside the other, and the intermediate heating element can have a ring shape, and a plurality of first grooves extending from an outer circumference and a plurality of second grooves extending from an inner circumference can be alternately defined in the intermediate heating element.

The inverter can be configured to control a phase difference between the first current and the second current to 0 degree or 180 degrees according to types of the object to be heated.

The number of loops generated in the intermediate heating element when the object to be heated is a magnetic body can be greater than the number of loops generated in the intermediate heating element when the object to be heated is a non-magnetic body.

A direction of the current induced in the intermediate heating element by the first working coil and a direction of the current induced in the intermediate heating element by the second working coil can be the same or different from each other.

When the object to be heated is a magnetic body, the direction of the current induced in the intermediate heating element by the first working coil and the direction of the current induced in the intermediate heating element by the second working coil may be different from each other, and when the object to be heated is a non-magnetic body, the direction of the current induced in the intermediate heating element by the first working coil and the direction of the current induced in the intermediate heating element by the second working coil can be the same.

The intermediate heating element can have a thickness greater than a skin depth.

The intermediate heating element can have a thickness less than a skin depth.

The induction heating type cooktop can further include at least one switch configured to control the directions of the first current and the second current.

### ADVANTAGEOUS EFFECTS

According to the embodiment of the present disclosure, by changing the distribution of the magnetic fields generated by the working coil, the magnetic fields may be focused on the cooking container or focused on the intermediate heating element, thereby improving the heating efficiency for each of the magnetic and non-magnetic bodies.

According to the embodiment of the present disclosure, since the area of the loop generated by the current induced in the intermediate heating element is adjusted according to the type of cooking container, the magnetic field concentration area may be changed regardless of the shape, thickness, material, etc. of the intermediate heating element, and thus, there may be advantages in that the restrictions on the design of intermediate heating element are minimized.

According to the embodiment of the present disclosure, the material of which the thickness is equal to or less than the skin depth may be used as the intermediate heating element, which has the advantage of securing diversity of different choices for in the material or shape of the intermediate heating element. In addition, as the restrictions on the intermediate heating element are minimized, the manufacturing costs may be reduced.

According to the embodiment of the present disclosure, since the coupling of the magnetic fields and the intermediate heating element is reduced while heating the magnetic body, the limitation in which the is undesirably heated or overheated may be minimized, and thus the stability may be improved.

### BRIEF DESCRIPTION OF THE DRAWINGS

FIG. 1 is a view for explaining an induction heating type cooktop according to an embodiment of the present disclosure.
FIG. 2 is a cross-sectional view illustrating the induction heating type cooktop and an object to be heated according to an embodiment of the present disclosure.
FIG. 3 is a cross-sectional view illustrating an induction heating type cooktop and an object to be heated according to another embodiment of the present disclosure.
FIGS. 4 and 5 are views for explaining a change in impedance between the intermediate heating element and the object to be heated according to different kinds of objects to be heated.
FIG. 6 is a control block diagram illustrating a method for controlling an inverter according to an object to be heated in the induction heating type cooktop according to an embodiment of the present disclosure.
FIG. 7 is a flowchart illustrating a method for operating the cooktop according to an embodiment of the present disclosure.
FIG. 8 is a view illustrating a state of magnetic fields when directions of current flowing through a plurality of working coils are different from each other.
FIG. 9, including parts(a) and (b), illustrates a state of a loop generated in an intermediate heating element when directions of the current flowing through the plurality of working coils are different from each other according to an embodiment of the present disclosure.
FIG. 10 is a view illustrating a state of the magnetic fields when directions of the current flowing through the plurality of working coils are the same according to an embodiment of the present disclosure.
FIG. 11, including parts (a) and (b), illustrates a state of the loop generated in the intermediate heating element when directions of the current flowing through the plurality of working coils are the same according to an embodiment of the present disclosure.
FIG. 12, including parts (a)-(d), illustrates examples of various shapes of the working coil according to embodiments of the present disclosure.
FIG. 13, including parts (a)-(f), illustrates various examples of the intermediate heating element installed together with the working coil illustrated in FIG. 12 according to an embodiment of the present disclosure.
FIG. 14, including parts (a)-(f), illustrates examples of various shapes of the working coil according to embodiments of the present disclosure.
FIG. 15, including parts (a) and (b), illustrates an example of the intermediate heating element installed together with the working coil illustrated in FIG. 14 according to an embodiment of the present disclosure.
FIG. 16 is a circuit diagram of a cooktop according to an embodiment of the present disclosure.
FIG. 17 is a circuit diagram of a cooktop according to another embodiment of the present disclosure.
FIG. 18 is a circuit diagram of a cooktop according to an embodiment of the present disclosure.
FIG. 19 is a circuit diagram of a cooktop according to another embodiment of the present disclosure.

### MODE FOR CARRYING OUT THE INVENTION

Hereinafter, example embodiments according to the present disclosure will be described in detail with reference to the accompanying drawings. In the drawings, the same reference numerals are used to denote the same or similar elements.

Hereinafter, an induction heating type cooktop according to an embodiment of the present disclosure will be described.

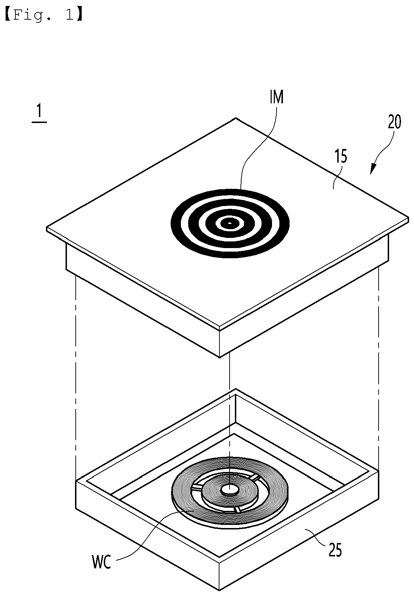

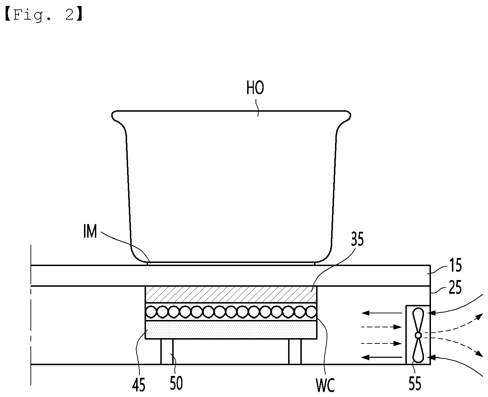

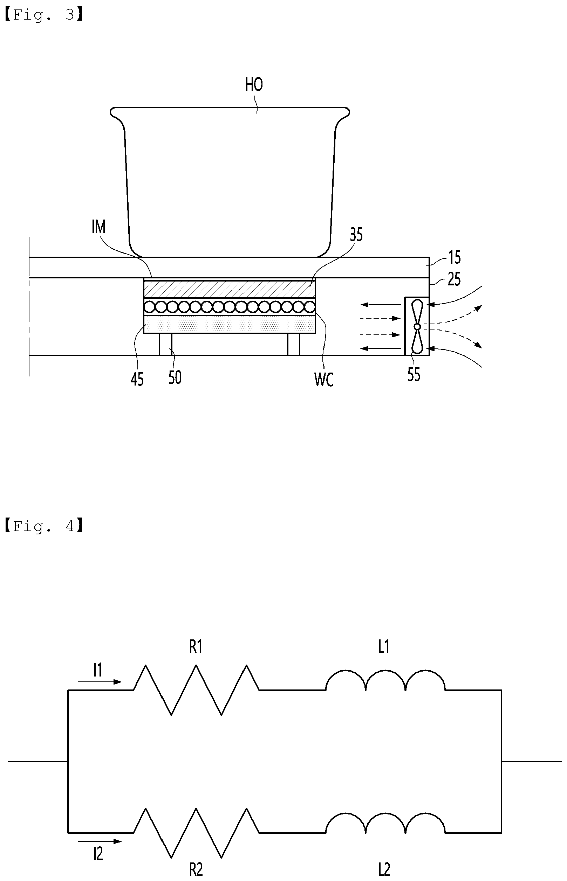

FIG. 1 is a view for explaining an induction heating type cooktop according to an embodiment. FIG. 2 is a cross-sectional view illustrating the induction heating type cooktop and an object to be heated according to an embodiment. FIG. 3 is a cross-sectional view illustrating an induction heating type cooktop and an object to be heated according to another embodiment.

First, referring to FIG. 1, an induction heating type cooktop 1 according to an embodiment of the present disclosure includes a case 25 (e.g., housing), a cover plate 20, a working coil WC, and an intermediate heating element IM.

The working coil WC can be installed in the case 25.

For reference, in the case 25, in addition to the working coil WC, various devices related to driving of the working coil can be installed in the case 25 (e.g., a power supply that provides AC power, a rectifier that rectifies the AC power of the power supply into DC power, an inverter that converts the DC power rectified by the rectifier into resonance current through a switching operation to provides the resonance current to the working coil, a control module (e.g., a controller, or a processor) that controls operations of various devices within the induction heating type cooktop 1, a relay or semiconductor switch that turns on or off the working coil, etc.).

The cover plate 20 can be coupled to an upper end of the case 25 and be provided with an upper plate 15 on which an object to be heated is disposed on a top surface thereof.

Specifically, the cover plate 20 can include the upper plate 15 for placing an object to be heated thereon, such as a cooking container For example an object to be heated can be placed on the upper plate 15.

Here, the upper plate 15 can be made of a glass material (e.g., ceramics glass).

In addition, the upper plate 15 can be provided with an input interface that receives an input from a user to transmit the input to a control module (e.g., a controller, or a processor) for an input interface. Of course, the input interface can be provided at a position other than the upper plate 15.

For reference, the input interface can be a module for inputting a desired heating intensity or driving time of the induction heating type cooktop 1 and can be variously implemented with a physical button or a touch panel. Also, the input interface can include, for example, a power button, a lock button, a power level adjustment button (+, -), a timer adjustment button (+, -), a charging mode button, and the like. In addition, the input interface can transmit the input received from the user to the control module for the input interface, and the control module for the input interface can transmit the input to the aforementioned control module (e.g., the control module for the inverter). In addition, the aforementioned control module can control the operations of various devices (e.g., the working coil) based on the input (e.g., a user input) provided from the control module for the input interface.

Information indicating whether the working coil WC is being driven and the heating intensity (e.g., thermal power) can be visually displayed on the upper plate 15 in a shape of a burner. The shape of the burner can be indicated by an indicator constituted by a plurality of light emitting devices (e.g., LEDs) provided in the case 25.

The working coil WC can be installed inside the case 25 to heat the object to be heated.

Specifically, the working coil WC can be driven by the aforementioned control module, and when the object to be heated is disposed on the upper plate 15, the working coil WC can be driven by the control module.

In addition, the working coil WC can directly heat an object to be heated (e.g., a magnetic body) having magnetism and can indirectly heat an object to be used (e.g., a non-magnetic body) through an intermediate heating element IM that will be described later.

In addition, the working coil WC can heat the object in an induction heating manner and can be provided to overlap with the intermediate heating element IM in a longitudinal direction (e.g., a vertical direction or an upward and downward direction).

For reference, although the structure in which one working coil WC is installed in the case 25 is illustrated in FIG. 1, the embodiment is not limited thereto. For example, one or more working coils WC can be installed in the case 25. The intermediate heating element IM can be installed to correspond to the working coil WC. The number of intermediate heating bodies IM and the number of working coils WC can be the same.

The intermediate heating element IM can be installed on the upper plate 15. The intermediate heating element IM can be applied on the upper plate 15 to heat the non-magnetic body among the objects to be heated. The intermediate heating element IM can be inductively heated by the working coil WC.

The intermediate heating element IM can be disposed on a top surface or a bottom surface of the upper plate 15. For example, as illustrated in FIG. 2, the intermediate heating element IM can be installed on the top surface of the upper plate 15, or as illustrated in FIG. 3, the intermediate heating element IM can be installed on the bottom surface of the upper plate 15. Also, according to an embodiment, the intermediate heating element IM can be disposed within the upper plate 15.

The intermediate heating element IM can be provided to overlap with the working coil WC in the longitudinal direction (e.g., the vertical direction or the upward and downward direction). Thus, the heating of different objects to be heated can be possible regardless of the arrangement positions and types of the objects to be heated.

Also, the intermediate heating element IM can have at least one of magnetic properties and non-magnetic properties (e.g., a magnetic property, a non-magnetic property, or both the magnetic and non-magnetic properties).

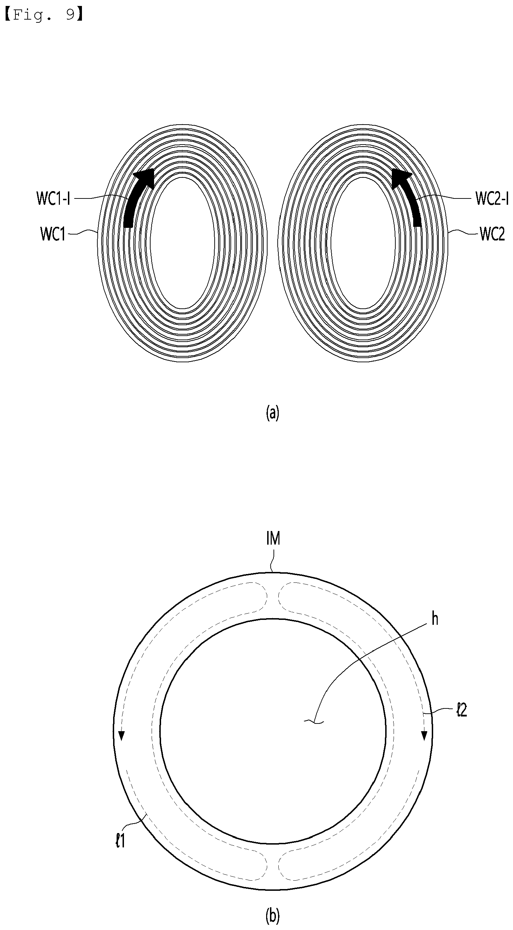

In addition, the intermediate heating element IM can be made of a conductive material (e.g., aluminum), and as illustrated in the drawings, a plurality of rings having different diameters can be installed on the upper plate 15 in a repeated shape, but is not limited thereto. For example, the intermediate heating element IM can be made of a material other than a conductive material. Also, the intermediate heating element IM can be provided in a shape other than the shape in which the plurality of rings having different diameters are repeated. Various shapes of the intermediate heating element IM will be described in more detail in FIGS. 9 to 15.

For reference, although one intermediate heating element IM is illustrated in FIGS. 2 and 3, the embodiment is not limited thereto. For example, a plurality of thin films can be installed, but for convenience of description, one intermediate heating element IM can be installed as an example.

More details of the intermediate heating element IM will be described later.

Next, referring to FIGS. 2 and 3, the induction heating type cooktop 1 according to an embodiment of the present disclosure can further include at least some or all of a thermal insulation material 35, a shielding plate 45, a support member 50, and a cooling fan 55.

The insulating material 35 can be provided between the upper plate 15 and the working coil WC.

Specifically, the insulating material 35 can be mounted under the upper plate 15, and the working coil WC can be disposed below the insulating material 35.

The insulating material 35 can prevent heat generated while the intermediate heating element IM or the object HO to be heated by the driving of the working coil WC from being transmitted to the working coil WC.

For example, when the intermediate heating element IM or the object HO to be heated is heated by electromagnetic induction of the working coil WC, the heat of the intermediate heating element IM or the object HO to be heated can be transferred to the upper plate 15, and then, the heat of the upper plate 15 can be transferred to the working coil WC again to damage the working coil WC.

The insulating material 35 can block the heat transferred to the working coil WC as described above to prevent the working coil WC from being damaged by the heat, and furthermore, prevent heating performance of the working coil WC from being deteriorated.

For reference, although it is not an essential component, a spacer can be installed between the working coil WC and the insulating material 35.

Specifically, the spacer can be inserted between the working coil WC and the insulating material 35 so that the working coil WC and the insulating material 35 are not in directly contact with each other. Thus, the spacer can prevent the heat generated while the intermediate heating element IM or the object HO to be heated by the driving of the working coil WC from being transmitted to the working coil WC through the insulating material 35.

For example, since the spacer partially shares the role of the insulating material 35, a thickness of the insulating material 35 can be minimized, and thus, an interval between the object HO to be heated and the working coil WC can be minimized (e.g., an air gap can be provided, which also acts as an insulator while reducing material costs and weight).

In addition, the spacer can be provided in plurality, and the plurality of spacers can be disposed to be spaced apart from each other between the working coil WC and the insulating material 35. Thus, air suctioned into the case 25 by a cooling fan 55 to be described later can be guided to the working coil WC by the spacers.

For example, the spacers can guide the air introduced into the case 25 by the cooling fan 55 be properly transferred to the working coil WC, thereby improving cooling efficiency of the working coil WC.

The shielding plate 45 can be mounted under the working coil WC to block magnetic fields generated downward when the working coil WC is driven.

Specifically, the shielding plate 45 can block the magnetic fields generated downward when the working coil WC is driven and can be supported upward by the support member 50.

The support member 50 can be installed between a bottom surface of the shielding plate 45 and the lower plate of the case 25 to support the shielding plate 45 upward.

Specifically, the support member 50 can support the shielding plate 45 in an upward direction to indirectly support the insulating material 35 and the working coil WC, and thus, the insulating material 35 can be in close contact with the upper plate 15.

As a result, the interval between the working coil WC and the object HO to be heated can be constantly maintained.

For reference, the support member 50 can include, for example, an elastic body (e.g., a spring) for supporting the shielding plate 45 upward, but is not limited thereto. In addition, since the support member 50 is not an essential component, the support member 50 can be omitted from the induction heating type cooktop 1.

The cooling fan 55 can be installed inside the case 25 to cool the working coil WC.

Specifically, the cooling fan 55 can be controlled to be driven by the above-described control module and can be installed on a sidewall of the case 25. Of course, the cooling fan 55 can be installed at a position other than the sidewall of the case 25, but in the present disclosure, for convenience of explanation, the structure in which the cooling fan 55 is installed on the sidewall of the case 25 will be described as an example.

In addition, as illustrated in FIGS. 2 and 3, the cooling fan 55 can suck air from the outside of the case 25 to deliver the air to the working coil WC or can move or push air (particularly, heated air) inside the case 25 to the outside, in order to discharge the heated air.

As a result, efficient cooling of the components (in particular, the working coil WC) inside the case 25 is possible.

Also, as described above, the air outside the case 25 delivered to the working coil WC by the cooling fan 55 can be guided to the working coil WC by the spacers. Thus, the direct and efficient cooling of the working coil WC is possible, in order to improve durability of the working coil WC (e.g., improvement in durability due to prevention of thermal damage).

The intermediate heating element IM can be a material having a resistance value that is capable of being heated by the working coil WC.

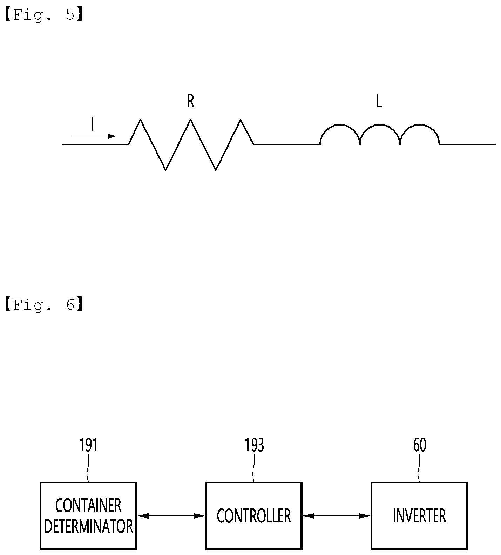

FIGS. 4 and 5 are views for explaining a change in impedance between the intermediate heating element and the object to be heated according to kinds of objects to be heated.

A thickness of the intermediate heating element IM can be inversely proportional to the resistance value (e.g., a surface resistance value) of the intermediate heating element IM. For example, as the thickness of the intermediate heating element IM decreases, the resistance value (e.g., surface resistance value) of the intermediate heating element IM increases. Thus, characteristics of the intermediate heating element IM can be changed to a load that can be heated.

For reference, the intermediate heating element IM can have a thickness of, for example, about 0.1 µm to about 1,000 µm, but is not limited thereto.

The intermediate heating element IM having such characteristics can be present to heat the non-magnetic body, and thus, impedance characteristics between the intermediate heating element IM and the object HO to be heated can be changed according to whether the object HO to be heated disposed on the upper plate 15 is a magnetic body or non-magnetic body.

First, the situation in which the object HO to be heated is the magnetic body will be described as follows.

When the magnetic object HO to be heated is disposed on the upper plate 15, and the working coil WC is driven, a resistance component R1 and an inductor component L1 of the object HO to be heated, which has the magnetism as illustrated in FIG. 4) can form an equivalent circuit with a resistance component R2 and an inductor component L2 of the intermediate heating element IM.

In this situation, the impedance (e.g., impedance composed by R1 and L1) of the object HO to be heated, which has the magnetism, in the equivalent circuit can be less than that of the intermediate heating element IM (e.g., the impedance composed by R2 and L2).

Thus, when the equivalent circuit as described above is formed, the magnitude of the eddy current I1 applied to the magnetic object HO to be heated can be greater than the magnitude of the eddy current I2 applied to the intermediate heating element IM. Thus, most of the eddy current generated by the working coil WC can be applied to the object HO to be heated, and thus, the object HO can be heated.

For example, when the object HO is the magnetic body, the above-described equivalent circuit can be formed, and thus, most of the eddy current can be applied to the object HO. As a result, the working coil WC can directly heat the object HO.

Of course, some eddy current can be also applied to the intermediate heating element IM to slightly heat the intermediate heating element IM, and thus, the object HO to be heated can be indirectly heated by the intermediate heating element IM. In this situation, the working coil WC can be a main heating source, and the intermediate heating element IM can be a secondary heating source. However, when compared to a degree of direct heating of the object HO by the working coil WC, a degree of indirect heating of the object HO by the intermediate heating element IM may not be significant.

Next, the situation in which the object to be heated is the non-magnetic body will be described as follows.

When the object HO is a non-magnetic object and is disposed on the upper plate 15, and the working coil WC is driven, there is no impedance in the non-magnetic object HO, and the intermediate heating element IM can have an impedance. For example, the resistance component R and the inductor component L can exist only in the intermediate heating element IM.

Therefore, when the non-magnetic object HO to be heated is disposed on the upper plate 15 and the working coil WC is driven, as illustrated in FIG. 5, the resistance component R and the inductor component L of the intermediate heating element IM can form an equivalent circuit.

Thus, the eddy current I can be applied only to the intermediate heating element IM, and eddy current may not be applied to the object HO itself, which does not have magnetism. More specifically, the eddy current I generated by the working coil WC can be applied only to the intermediate heating element IM, and thus, the intermediate heating element IM can be heated.

For example, when the object HO to be heated is the non-magnetic body, as described above, the eddy current I can be applied to the intermediate heating element IM to heat the intermediate heating element IM, and the object HO to be heated, which does not have magnetism, can be indirectly heated by the intermediate heating element IM heated by the working coil WC. In this situation, the intermediate heating element IM can be a main heating source.

In summary, the object HO can be directly or indirectly heated by a single heat source, which is called the working coil WC, regardless of whether the object HO is the magnetic body or the non-magnetic body. For example, when the object HO is the magnetic body, the working coil WC can directly heat the object HO itself, and when the object HO is the non-magnetic body, the intermediate heating element IM heated by the working coil WC can indirectly heat the object HO.

As described above, the induction heating type cooktop 1 according to the embodiment of the present disclosure can heat both the magnetic body and the non-magnetic body, regardless of the arrangement position and type of the object HO. Thus, the user can place the object to be heated on any heating area on the top plate 15 without needing to determine whether the object HO is the magnetic body or the non-magnetic body, thereby improving ease of use.

In addition, the induction heating type cooktop 1 according to an embodiment of the present disclosure can directly or indirectly heat the object to be heated with the same heat source (e.g., the same working coil WC), and thus, there is no need to provide a separate heating plate or a radiator heater. Thus, it is possible to not only improve heating efficiency but also reduce material costs.

However, as described above, when the object HO to be heated is a magnetic body, the upper plate 15 can be over heated to cause a safety problem.

In addition, when the object HO to be heated is the magnetic body, since not only the object HO but also the intermediate heating element IM are heated, there is a limitation in that the heating efficiency of the object HO is slightly deteriorated. Thus, when the object HO reduces the magnetic fields coupled to the intermediate heating element IM, there is a disadvantage in that an output for the object HO to be heated, which is a non-magnetic, is reduced.

Therefore, the cooktop 1 according to an embodiment of the present disclosure can concentrate the magnetic fields to the object HO to be heated when heating the magnetic body and can concentrate the magnetic fields to the intermediate heating element IM when heating the non-magnetic body. In other words, the magnetic fields can be dynamically changed based on what type of object HO is being used. For example, when the object HO is magnetic, the magnetic fields can be focused on the object HO itself, and when the object HO is non-magnetic, the magnetic fields can be focused on the intermediate heating element IM.

Particularly, the cooktop 1 can change a loop of induced current generated in the intermediate heating element IM to control a magnetic field concentration area. For this, the working coil WC can be constituted by a plurality of working coils. The working coil WC can include at least two working coils. For example, the working coil WC can include a first working coil and a second working coil. However, this is only an example, and the working coil WC can include three or more working coils.

The plurality of working coils, for example, the first working coil and the second working coil can generate magnetic fields that pass through at least the object HO to be heated or the intermediate heating element IM.

The cooktop 1 according to an embodiment of the present disclosure can control the magnetic field concentration area by controlling current flowing through the working coil WC, e.g., the current flowing through the plurality of working coils.

The cooktop 1 can control the current flowing through the plurality of working coils according to the type of object HO to be heated. In this specification, the object HO to be heated can refer to a cooking container (e.g., a pot or a pan, etc.).

FIG. 6 is a control block diagram illustrating a method for controlling an inverter according to an object to be heated in the induction heating type cooktop according to an embodiment of the present disclosure.

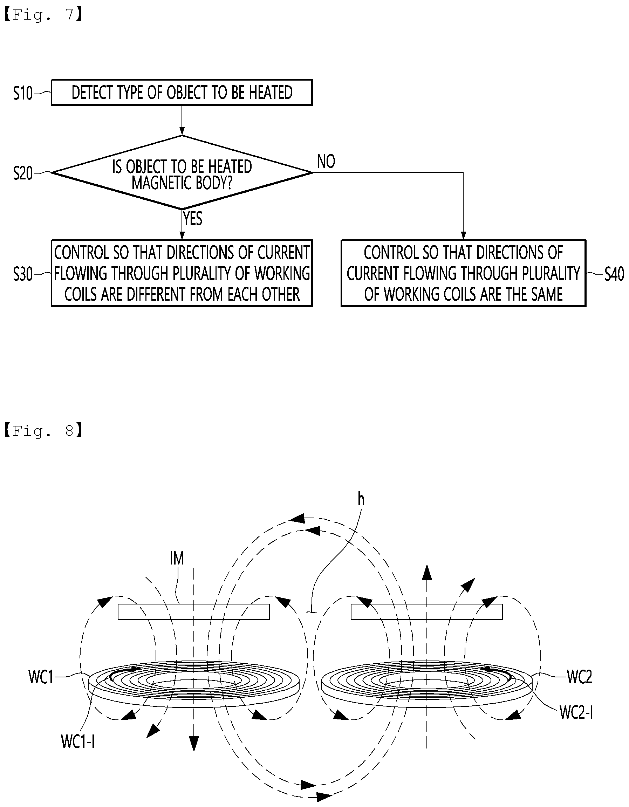

FIG. 6 illustrates an example of only some components that are used to explain an operation method of the cooktop 1 according to the object HO to be heated, and some of the components illustrated in FIG. 8 can be omitted, or other components can be further provided.

The cooktop 1 can include a container determinator 191, a controller 193 (e.g., a processor), and an inverter 60.

The container determinator 191 can determine the type of the object HO to be heated, for example the type of a cooking container 1. The container determinator 191 can determine a material of the object HO to be heated. In summary, the container determinator 191 can acquire the type of the object HO to be heated or the material of the object HO to be heated. The type of the object HO to be heated can be a concept including a material of the cooking container 1.

A method for determining the type of the object to be heated through the container determinator 191 can vary.

The inverter 60 can include a plurality of switching elements driven to allow current to flow through the working coil WC. For example, the plurality of switching elements can be SiC (silicon carbide) elements, but is not limited thereto. For example, the plurality of switching elements can be GaN elements. For example, the plurality of switching elements can be wide band-gap (WBG) elements.

The inverter 60 can control a first direction of first current flowing through the first working coil and a second direction of second current flowing through the second working coil so that the loop generated in the intermediate heating element IM is changed in size. The inverter 60 can control the first direction of the first current flowing through the first working coil and the second direction of the second current flowing through the second working coil.

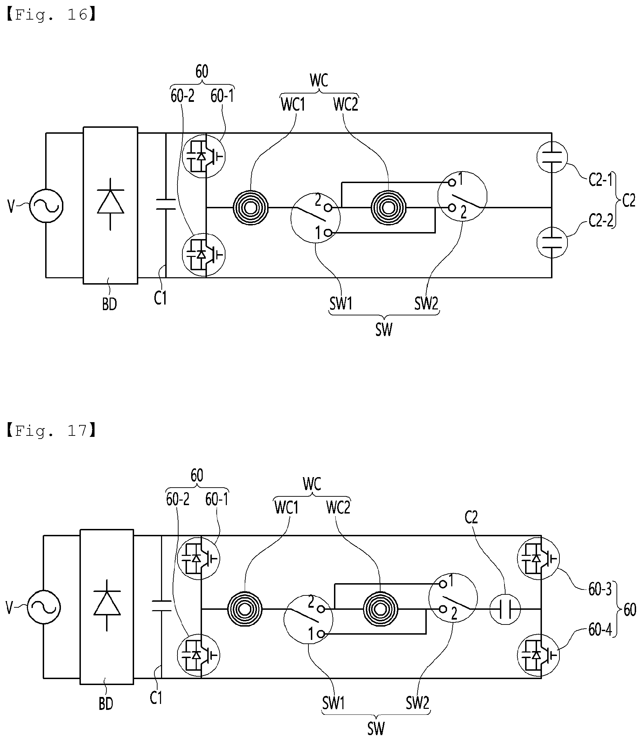

The inverter 60 will be described in more detail in FIGS. 16 to 19.

The inverter 60 can control the first direction of the first current and the second direction of the second current according to the type of object HO to be heated, and thus, an area of the loop generated by the current induced in the intermediate heating element IM can be changed.

The controller 193 can control an operation of the cooktop 1. The controller 193 can control each component provided in the cooktop 1 such as a container determinator 191 and the inverter 60.

FIG. 7 is a flowchart illustrating a method for operating the cooktop according to an embodiment of the present disclosure.

The cooktop 1 can detect the type of object HO to be heated (S10) .

The type of object HO to be heated can refer to a material of the object HO to be heated.

For example, the cooktop 1 can detect the material of the cooking container.

The cooktop 1 can determine whether the object HO to be heated is a magnetic body (S20).

For example, the cooktop 1 can determine whether the object HO to be heated is a magnetic body or a non-magnetic body. Thus, the cooktop 1 can determine whether the object HO to be heated is the non-magnetic body according to an embodiment.

If the object HO to be heated is the magnetic body, the cooktop 1 can control the current flowing through the plurality of working coils to flow in different manners (S30).

In this situation, the cooktop 1 can adjust a phase difference of the current flowing through the plurality of working coils to be 180 degrees.

If the object HO to be heated is not the magnetic body (e.g., when it is a non-magnetic body), the cooktop 1 can equally control the current flowing through the plurality of working coils to flow in the same direction (S40).

For example, if the object HO to be heated is the non-magnetic body, the cooktop 1 can equally control the directions of the current flowing through the plurality of working coils.

In this situation, the cooktop 1 can adjust the phase difference of the current flowing through the plurality of working coils to be 0 degrees.

For example, the inverter 60 can control the phase difference between the first current WC1-I and the second current WC2-I to be 0 degrees or 180 degrees, according to the type of object HO to be heated.

When the object HO to be heated is the magnetic body, the inverter 60 can be driven so that the first direction of the first current WC1-I flowing through the first working coil WC1 and the second direction of the second current WC2-I flowing through the second working coil WC2 are different from each other, and when the object HO to be heated is the non-magnetic body, the inverter can be driven so that the first direction and the second direction are the same.

When the directions of the current flowing through the plurality of working coils are different from each other, the direction of the current induced in the intermediate heating element IM by each of the plurality of working coils can be different, and thus, the induced current can be electrically separated to generate two different sub-loops. As a result, an area of each sub-loop is less than that of the main loop that is generated when the directions of the current flowing through the plurality of working coils are the same, which will be described later.

When the directions of the current flowing through the plurality of working coils are the same, the direction of the current induced in the intermediate heating element IM by each of the plurality of working coils can be the same, and thus, the induced current can generate one large loop. As a result, an area of the loop is greater than that of the sub-loops that are generated when the directions of the current flowing through the plurality of working coils described above are different from each other.

In other words, when the area of the loop generated in the intermediate heating element IM is smaller, then the coupling force with the magnetic field is smaller, and when the area of the loop is larger, then the coupling strength with the magnetic fields is greater. Thus, the cooktop 1 can control a magnetic field concentration area by controlling the phases of the plurality of working coils.

The cooktop 1 can selectively heat the intermediate heating element IM by controlling the area of the loop by controlling the directions of the current flowing through the plurality of working coils. Particularly, a first area (size) of the loop generated in the intermediate heating element IM when the object HO to be heated is the magnetic body can be less than a second area (size) of the loop generated in the intermediate heating element when the object HO to be heated is the non-magnetic body.

For example, the cooktop 1 can control the coupling force of the magnetic fields generated from the working coil WC and the intermediate heating element IM to concentrate the magnetic fields on the object HO itself or the intermediate heating element IM. Thus, the cooktop 1 can directly heat the object HO or indirectly heat the object HO by directly heating the intermediate heating element IM according to the type of object HO to be heated. The cooktop 1 can maximize an output for each of the magnetic and non-magnetic bodies by changing the magnetic field distribution according to the type of the object HO.

Next, with reference to FIGS. 8 to 11, the loop generated in the intermediate heating element IM according to the directions of the current flowing through the plurality of working coils will be described in detail.

Hereinafter, it is assumed that the plurality of working coils include the first working coil WC1 and the second working coil WC2.

FIG. 8 is a view illustrating a state of the magnetic fields when the currents in the plurality of working coils flow in different directions, and FIG. 9 is a view illustrating a state of the loop generated in the intermediate heating element when the currents in the plurality of working coils flow in different directions.

The inverter 60 can control the first direction of the first current WC1-I flowing through the first working coil WC1 and the second direction of the second current WC2-I flowing through the second working coil WC2 so that the directions are different from each other. As illustrated in FIG. 8, the first direction can be a clockwise direction, and the second direction can be a counterclockwise direction. However, this is only an example, and the first direction can be a counterclockwise direction, and the second direction can be a clockwise direction.

When the first current WC1-I flows in the clockwise direction in the first working coil WC1, the magnetic fields can pass downward through a central portion of the first working coil WC1, and a portion of the magnetic fields passing through the central portion can move to the outside of the first working coil WC1 and then rotate again along a path that passes through the central portion from the top to the bottom. For example, when the first current WC1-I flows in the clockwise direction in the first working coil WC1, the magnetic fields can rotate from the outside to the inside.

When the second current WC2-I flows in the counterclockwise direction in the second working coil WC2, the magnetic fields can pass upward through a central portion of the second working coil WC2, and a portion of the magnetic fields passing through the central portion can move to the outside of the second working coil WC2 and then rotate again along a path that passes through the central portion from the bottom to the top. For example, when the second current WC2-I flows in the counterclockwise direction in the second working coil WC2, the magnetic fields can rotate from the inside to the outside.

Thus, the magnetic fields can overlap with each other in a central region of the working coil WC, and the magnetic fields can be offset in an outer region.

FIG. 9 is a view illustrating a state in which the working coil WC and the intermediate heating element IM of FIG. 8 are distinguished from each other. For example, part (a) of FIG. 9 is a view illustrating the working coil WC of FIG. 8. As described above, the first current WC1-I rotates in the clockwise direction, and the second current WC2-I rotates in the counterclockwise direction.

Part (b) of FIG. 9 is a view illustrating the intermediate heating element IM of FIG. 8 and illustrates a flow of induced current by magnetic fields generated in the first and second working coils WC1 and WC2. The induced current flows in the counterclockwise direction in the intermediate heating element IM due to the magnetic fields generated in the first working coil WC1, and the induced current flows in the clockwise direction in the intermediate heating element IM due to the magnetic fields generated in the second working coil WC2. For example, the induced current by the first working coil WC1 and the induced current by the second working coil WC2 can flow in different directions, and thus, the loops generated by each induced current can be electrically separated from each other. For example, when the current induced in the intermediate heating element IM flows in different directions, the loops can be separately generated at left and right sides of the intermediate heating element IM. For example, as illustrated in part (b) of FIG. 9, a first loop l1 generated by the current induced by the first working coil WC1 and a second loop l2 generated by the current induced by the second working coil WC2 can be generated in the intermediate heating element IM.

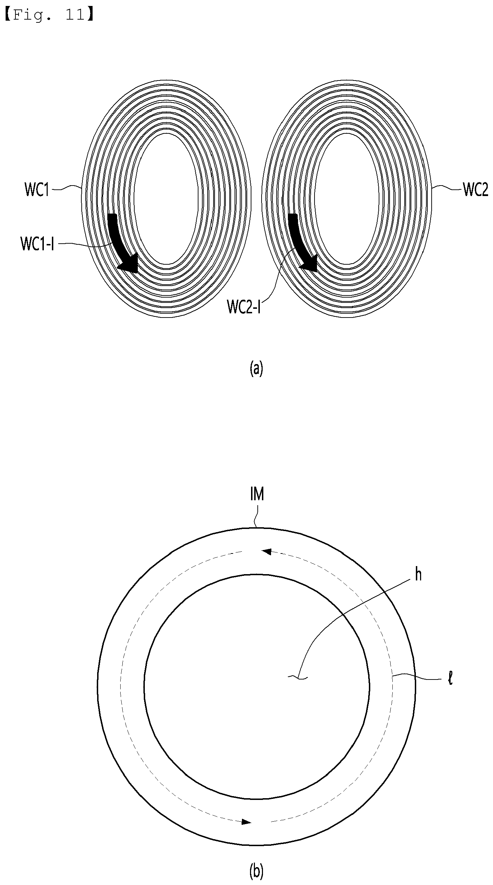

In this situation, an area of the loop generated in the intermediate heating element IM can be the sum of an area of the first loop l1 and an area of the second loop l2. This loop area is smaller than the area of the loop described later in FIG. 11, and as a result, the coupling force with the magnetic fields generated in the working coil WC can be lowered and electrically separated.

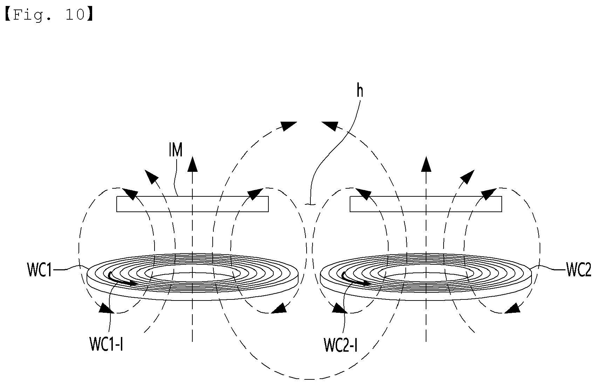

FIG. 10 is a view illustrating a state of the magnetic fields when the currents in the plurality of working coils flow in the same direction, and FIG. 11 is a view illustrating a state of the loop generated in the intermediate heating element when the currents in the plurality of working coils flow in the same direction.

The inverter 60 can control the first direction of the first current WC1-I flowing through the first working coil WC1 and the second direction of the second current WC2-I flowing through the second working coil WC2 so that the directions are the same. As illustrated in FIG. 10, both of the first direction and the second direction can be the counterclockwise direction. However, this is only an example, and both the first direction and the second direction can be the clockwise direction.

When the first current WC1-I flows in the counterclockwise direction in the first working coil WC1, the magnetic fields can pass upward through a central portion of the first working coil WC1, and a portion of the magnetic fields passing through the central portion can move to the outside of the first working coil WC1 and then rotate again along a path that passes through the central portion from the bottom to the top. For example, when the first current WC1-I flows in the counterclockwise direction in the first working coil WC1, the magnetic fields can rotate from the inside to the outside.

Similarly, when the second current WC2-I flows in the counterclockwise direction in the second working coil WC2, the magnetic fields can pass upward through a central portion of the second working coil WC2, and a portion of the magnetic fields passing through the central portion can move to the outside of the second working coil WC2 and then rotate again along a path that passes through the central portion from the bottom to the top. For example, when the second current WC2-I flows in the counterclockwise direction in the second working coil WC2, the magnetic fields can rotate from the inside to the outside.

Thus, the magnetic field can be offset in the center region of the working coil WC, and the magnetic fields can overlap with each other in the outer region.

FIG. 11 is a view illustrating a state in which the working coil WC and the intermediate heating element IM of FIG. 10 are distinguished from each other. For example, part (a) of FIG. 11 is a view illustrating the working coil WC of FIG. 10. As described above, the first current WC1-I and the second current WC2-I rotate in the same counterclockwise direction.

Part (b) of FIG. 11 is a view illustrating the intermediate heating element IM of FIG. 10 and illustrates a flow of induced current by magnetic fields generated in the first and second working coils WC1 and WC2. The induced current flows in the counterclockwise direction in the intermediate heating element IM due to the magnetic fields generated in the first working coil WC1, and also, the induced current flows in the counterclockwise direction in the intermediate heating element IM due to the magnetic fields generated in the second working coil WC2. For example, the induced current by the first working coil WC1 and the induced current by the second working coil WC2 can flow in the same direction, and thus, the induced current can form one large loop. For example, as illustrated in part (b) of FIG. 11, one loop l can be generated in the intermediate heating element IM by the first working coil WC1 and the second working coil WC2.

In this situation, the area of the loops generated in the intermediate heating element IM can be an area of the loop l integrated into one large loop.

Thus, the area of the loop illustrated in FIG. 9 can be less than the area of the loop illustrated in FIG. 10. For example, the area of the loop generated in the intermediate heating element IM when the currents flow in different directions through the plurality of working coils WC1 and WC2 can be less than that of the loop generated in the intermediate heating element IM when the currents flow in the same direction through the plurality of working coils WC1 and WC2.

For example, the first size of the loop generated in the intermediate heating element IM when the first direction of the first current WC1-I flowing through the first working coil WC1 and the second direction of the second current WC2-I flowing through the second working coil WC2 are different from each other can be less than the second size of the loop generated in the intermediate heating element IM when the first direction and the second direction are the same.

In addition, as the area of the loop becomes smaller, the magnetic fields generated in the working coil WC can have less coupling force with the intermediate heating element IM, and thus, the magnetic fields coupled to the object HO to be heated can increased, since the magnetic fields coupled to the intermediate heating element IM are decreased. In other words, as the magnetic field generated in the working coil WC has less coupling force with the intermediate heating element IM, heat generation of the intermediate heating element IM can be minimized.

As the area of the loop increases, the magnetic fields generated in the working coil WC can have a large coupling force with the intermediate heating element IM, and thus, the intermediate heating element IM can be coupled to many magnetic fields. Thus, since the intermediate heating element IM generates heat, the object HO to be heated can be heated through the intermediate heating element IM.

This intermediate heating element IM can be provided at a thickness regardless of a skin depth. For example, the intermediate heating element IM can have a thickness greater than the skin depth or can have a thickness less than the skin depth. Regardless of whether the thickness of the intermediate heating element IM is thinner or thicker than the skin depth or thicker than the skin depth, the intermediate heating element IM can be selectively heated according to the direction of the current flowing through the plurality of working coils. For example, the intermediate heating element IM can be made of a material such as aluminum or silver and have a thickness thinner than the skin depth, or can be made of a material such as stainless steel and have a thickness thicker than the skin depth. For example, according to an embodiment of the present disclosure, the design of the intermediate heating element IM provided in the cooktop 1 may not be limited in material, thickness, etc., and has an advantage of being implemented in various forms.

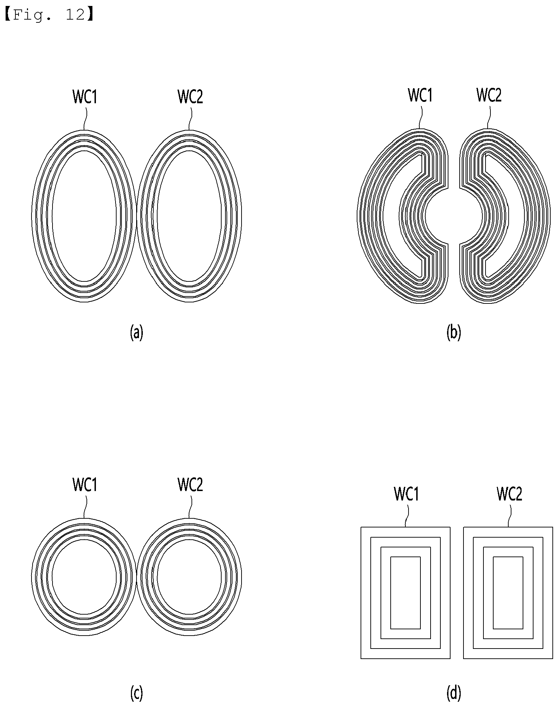

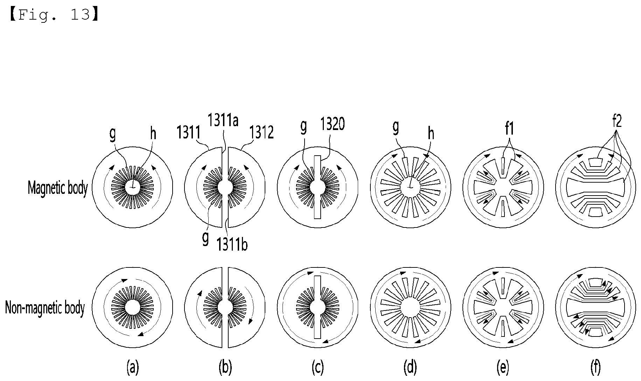

FIG. 12 is a view illustrating examples of various shapes of the working coil according to embodiments of the present disclosure, and FIG. 13 is a view illustrating various examples of the intermediate heating element installed together with the working coil illustrated in FIG. 12 according to embodiments of the present disclosure.

Particularly, FIG. 12 illustrates various examples in which the working coil WC includes the first and second working coils WC1 WC2, and the first and second working coils WC1 WC2 are disposed side by side. In addition, FIG. 13 illustrates various examples of the intermediate heating element IM installed together when the working coil WC has a structure in which the plurality of working coils are disposed side by side as the example of FIG. 12.

For example, the first working coil WC1 and the second working coil WC2 can be arranged side by side, and the intermediate heating element IM can have a ring shape or a closed loop shape. However, at least one groove having a specific pattern can be defined in the ringshaped intermediate heating element IM according to an embodiment.

According to a first embodiment, as illustrated in part (a) of FIG. 12, the working coil WC can be constituted by a first working coil WC1 and a second working coil WC2, each of which has an elliptical shape or an oval shape.

According to a second embodiment, the working coil WC can be constituted by a first working coil WC1 and a second working coil WC2, each of which has a half-moon shape or a crescent shape.

According to a third embodiment, as illustrated in part (b) of FIG. 12, the working coil WC can have a half-moon shape and be constituted by a first working coil WC1 and a second working coil WC2, in which at least a portion of a surface adjacent to the other working coil is concave.

According to a fourth embodiment, as illustrated in part (c) of FIG. 12, the working coil WC can be constituted by a first working coil WC1 and a second working coil WC2, each of which has a circular shape.

According to a fifth embodiment, as illustrated in part (d) of FIG. 12, the working coil WC can be constituted by a first working coil WC1 and a second working coil WC2, each of which has a square shape or a rectangular shape.

However, the above-described first to fifth embodiments are merely examples, and the shapes of the first working coil WC1 and the second working coil WC2 constituting the working coil WC can vary.

When the working coil WC is constituted by the first and second working coils WC1 and WC2 disposed side by side, the intermediate heating element IM can be the same type of configurations as the examples shown in FIG. 13.

According to the first embodiment, as illustrated in part (a) of FIG. 13, the intermediate heating element IM can have a circular shape with a hole h at a center thereof, and a plurality of grooves g can be defined at the inside area around the hole h.

According to the second embodiment, as illustrated in part (b) of FIG. 13, the intermediate heating element IM can be divided into two members 1311 and 1312, and each of the two members 1311 and 1312 can have a semicircular shape. In addition, each of the two members can have a concave central portion of surfaces 1311a and 1311b corresponding to the different members, and a plurality of grooves g can be defined around the central portion.

According to the third embodiment, as illustrated in part (c) of FIG. 13, the intermediate heating element IM can be provided with a through-portion 1320 that is elongated in one direction (e.g., a slit shape or a keyhole shape), the hole defined in the center can be larger than that around the through-portion, and the plurality of grooves g can be defined around the center of through-portion 1320.

According to the fourth embodiment, as illustrated in part (d) of FIG. 13, the intermediate heating element IM can have a circular shape with a hole h defined in the center thereof, and a plurality of grooves g can be defined from the hole h defined in the center thereof toward an outer circumference (e.g., an iris shape). Here, a length of each of the plurality of grooves g can be longer than a radius of the intermediate heating element IM. For example, a length of the groove g of the intermediate heating element IM illustrated in part (a) of FIG. 13 can be shorter than the radius, and a length of the groove g of the intermediate heating element IM illustrated in part (b) of FIG. 13 can be longer than the radius.

As illustrated in parts (a) to (d) of FIG. 13, when the intermediate heating element IM has the plurality of grooves g around the center, the heating area can be larger than when the intermediate heating element IM has a simple ring shape, and thus, heating efficiency for the non-magnetic body can be improved.

According to the fifth embodiment, as illustrated in parts (e) or (f) of FIG. 13, the grooves f1 and f2 can be defined in the intermediate heating element IM in a pattern having a plurality of paths, e.g., a path, through which the induced current flows along an outer circumference, and a path, through which the induced current flows along the inside. Particularly, as illustrated in part (e) of FIG. 13, the groove f1 can be provided in a pattern having a path in which the induced current flowing along the inside has a circular, elliptical, or square shape, or as illustrated in part (f) of FIG. 13, the groove f2 can be provided in a single pattern having a path elongated in one direction.

As illustrated in parts (e) and (f) of FIG. 13, when the induced current not only flows along the outer circumference but also flows through the inside, there is an advantage that heating performance for each type of object HO to be heated is improved. In addition, there is an advantage that even a small-sized object HO to be heated is heated through the loop generated by the current flowing along the inside.

Particularly, if the groove f1 has a pattern in which a plurality of loops are generated at the inside, as illustrated in part (e) of FIG. 13, there is an advantage in that, the area of the loop increases to maximize the heating area when the non-magnetic body is heated.

In addition, if the groove f2 has a pattern that allows the current to flow for a long time in one direction from the inside, as illustrated in part (f) of FIG. 13, when the magnetic body is heated, an electrical splitting effect can be maximized so that the area of the loop is almost 0 (e.g., canceled out), and heat generation of the intermediate heating element is minimized, and as a result, there is an advantage that magnetic heating efficiency is maximized. When the intermediate heating element IM having the grooves f2 that has the same pattern as part (f) in FIG. 13, there is an advantage that, when current in the same direction is induced, the area of the loop is maximized, and even when a small-sized object HO is placed on the cooktop it can be effectively heated by the loop generated by the inner current.

As in the fifth embodiment, when the groove defined in the intermediate heating element IM is provided to have a pattern in which the induced current flows along each of the outer circumference and the inner side, there is an advantage that even a small object HO can be effectively heated by the induced current flowing along the inside.

Since the above-described embodiments are merely examples for convenience of explanation, it is reasonable that they are not limited thereto.

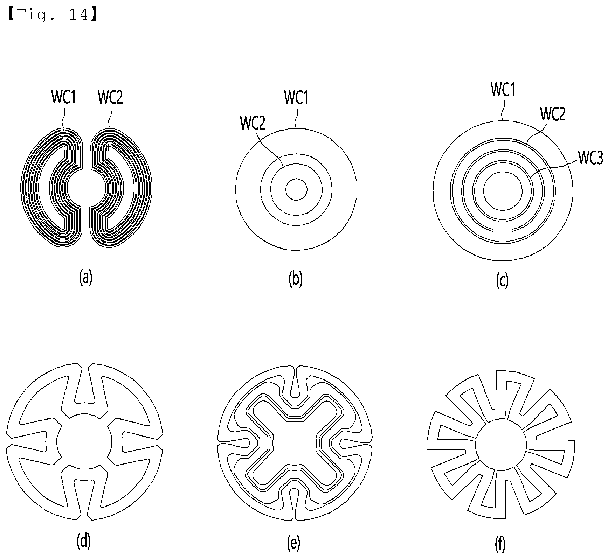

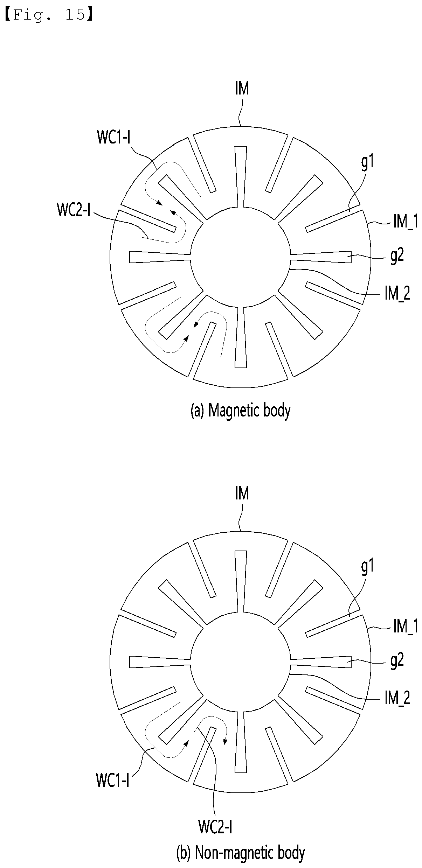

FIG. 14 is a view illustrating examples of various shapes of the working coil according to embodiments of the present disclosure, and FIG. 15 is a view illustrating examples of the intermediate heating element installed together with the working coil illustrated in FIG. 14.

Particularly, FIG. 14 illustrates examples in which the working coil WC is provided to have an inner coil and an outer coil. FIG. 15 illustrates an example of the intermediate heating element IM installed together when the working coil WC has a structure including the inner working coil and the outer working coil as illustrated in FIG. 14.

According to the first embodiment, as illustrated in part (a) of FIG. 14, the working coil WC can include a first working coil WC1 and a second working coil WC2. Each of the first working coil WC1 and the second working coils WC2 can have a semicircular shape or a crescent shape, and a central portion of a surface adjacent to the other working coil can be concave. Thus, the concave portion of the first and second working coils WC1 and WC2 can provide the inner coil, and the outer circumferential portion can provide the outer coil.

According to the second embodiment, as illustrated in part (b) of FIG. 14, the working coil WC includes a first working coil WC1 and a second working coil WC2. A central hole can be defined in a central portion of each of the first and second working coils WC1 and WC2, and the second working coil WC2 can be disposed at a central portion of the first working coil WC1. For example, the second working coil WC2 can be disposed inside the first working coil WC1. Thus, the first working coil WC1 can provide an outer coil, and the second working coil WC2 can provide an inner coil.

According to the third embodiment, as illustrated in part € of FIG. 14, the working coil WC can include first, second and third working coils WC1, WC2, and WC3. The second working coil WC2 can be disposed inside the first working coil WC1, and the third working coil WC3 can be disposed inside the second working coil WC2. In part € of FIG. 14, the second working coil WC2 is provided in a horseshoe shape, but this is only an example. For example, the second working coil WC2 can have a ring shape. In addition, the third working coil WC3 can be illustrated in a ring shape, but can also have a horseshoe shape.

According to the fourth embodiment, as illustrated in parts (d), €, and (f) of FIG. 14, the working coil WC can be provided as one working coil, or at least a portion of the working coil can be bent to have an inner coil and an outer coil.

When the working coil WC is constituted by the inner coil and the outer coil, the intermediate heating element IM can be provided so that the induced current flows along each of outer and inner sides to merge or collide with each other.

Referring to the example of FIG. 15, a hole can be defined in a center of the intermediate heating element IM. In addition, a plurality of grooves g1 defined inward from an outer circumference IM_1 and a plurality of grooves g2 defined outward from an inner circumference IM_2 can be defined.

For example, one of the first working coil WC1 and the second working coil WC2 can be disposed inside the other, and simultaneously, the intermediate heating element IM can have a ring shape, and the plurality of first grooves g1 extending from the outer circumference IM_1 and the plurality of second grooves g2 extending from the inner circumference IM_2 can be provided alternately. As the first grooves g1 and the second grooves g2 are provided alternately, the current induced in the intermediate heating element IM can flow in a zigzag manner.

Therefore, if the object HO to be heated is the magnetic body, as illustrated in part (a) of FIG. 15, the current WC1-I induced by one of the inner coil and the outer coil and the current WC2-I induced by the other one can flow in different directions and can effectively cancel each other out.

However, if the object HO to be heated is the non-magnetic body, as illustrated in part (b) of FIG. 15, the current WC1-I induced by one of the inner coil and the outer coil and the current WC2-I induced by the other one can flow in the same direction.

Referring to FIGS. 13 and 15, the number of loops generated in the intermediate heating element IM when the object HO to be heated is the magnetic body can be greater than the number of loops generated in the intermediate heating element IM when the object HO to be heated is the non-magnetic body.

In summary, the area of the loop generated in the intermediate heating element IM by the working coil WC when the object HO to be heated is the non-magnetic body can be greater than that of the loop when the object HO to be heated is the magnetic body. Therefore, the number of magnetic fields coupled to the working coil WC when the object HO to be heated is the magnetic body can be greater than that of magnetic fields coupled to the working coil WC when the object HO to be heated is the non-magnetic body. In addition, since the area of the loop generated in the intermediate heating element IM is maximized when the object HO to be heated is the non-magnetic body, the coupling force between the magnetic fields generated in the working coil WC and the intermediate heating element IM can be maximized, and thus, the intermediate heating element IM can be overheated, and heat generated in the intermediated heating element IM can heat the object HO to be heated.

In the present disclosure, the direction of the current induced in the intermediate heating element IM by the first working coil WC1 and the direction of the current induced in the intermediate heating element IM by the second working coil WC2 can be the same or different from each other according to the type of object HO to be heated. For example, if the object HO to be heated is the non-magnetic body, the direction of the current induced in the intermediate heating element IM by the working coil WC1 and the direction of the current induced in the intermediate heating element IM by the second working coil WC2 can be the same direction, and if the object HO to be heated is the magnetic body, the direction of the current induced in the intermediate heating element IM by the working coil WC1 and the direction of the current induced in the intermediate heating element IM by the second working coil WC2 can be different directions.

As described above, in order to control the direction of the current induced in the intermediate heating element IM to be different or the same, the directions of the current supplied to the first working coil WC1 and the second working coil WC2 have to be controlled to be the same or different from each other.

A control circuit for controlling the directions of the current flowing through the first working coil WC1 and the second working coil WC2 can be configured in various manners.

A circuit diagram for controlling the directions of the current flowing through the plurality of working coils of the cooktop according to various embodiments of the present disclosure will be described with reference to FIGS. 16 to 19.

FIG. 16 is a circuit diagram of a cooktop according to a first embodiment of the present disclosure.

FIG. 16 illustrates an example in which a circuit for controlling a plurality of working coils is implemented as a half-bridge inverter and a coil switching circuit.

As illustrated in the circuit diagram of FIG. 16, a cooktop 1 can include a power supply V configured to provide AC power, a bridge diode BD configured to rectify the AC power of the power supply V into DC power, a DC link capacitor C1 configured to smooth the rectified direct current power, an inverter 60 configured to convert the rectified direct current power into resonance current through a switching operation to provide the resonance current to the working coil WC, a working coil WC configured to generate magnetic fields due to the resonance current, a switch SW configured to control the current direction of the working coil WC, and a resonance capacitor C2.

The power supply V, the bridge diode BD, and the DC link capacitor C1 can rectify AC power into DC power and smooth the rectified DC power to be provided the inverter 60.

The inverter 60 can serve to convert the rectified direct current power into the resonance current through the switching operation and can be constituted by at least two switching elements 60-1 and 60-2. The switching elements 60-1 and 60-2 can be high-frequency semiconductor elements. For example, the switching elements can include IGBT, BJT, MOSFET, etc.

One end of the first working coil WC1 can be connected between the first switching element 60-1 and the second switching element 60-2, and the other end of the first working coil WC1 can be connected to the first switch SW1. One end of the second working coil WC2 can be connected to the first switch SW1, and the other end can be connected to the second switch SW2.

The second switch SW2 can have one end connected to the second working coil WC2 and the other end connected to the resonance capacitor C2.

The first switch SW1 and the second switch SW2 can be in contact with a contact point 1 or a contact point 2 at the same time by a control signal of the controller 193.

For example, when the first switch SW1 and the second switch SW2 are connected to the contact point 1, the current passing through the first working coil WC1 in the clockwise direction can pass through the second working coil WC2 along the contact point 1 connected to the first working coil WC1 in the counterclockwise direction to move along the contact point 1 connected to the second switch SW2.

For example, when the first switch SW1 and the second switch SW2 is in contact with the contact point 1 at the same time, directions of the current flowing through the first working coil WC1 and the second working coil WC2 can be opposite to each other.

When the first switch SW1 and the second switch SW2 are connected to the contact point 2 at the same time, the current passing through the first working coil WC1 in the clockwise direction can pass through the second working coil WC2 along the contact point 2 connected to the first working coil WC1 in the clockwise direction to move along the contact point 2 of the second switch SW2.

For example, when the first switch SW1 and the second switch SW2 is in contact with the contact point 1 at the same time, the current flowing through the first working coil WC1 and the second working coil WC2 can be flowing in the same direction.

One end of the second switch SW2 can be in contact with the contact point 1 or the contact point 2 and then be connected to the second working coil WC2, and the other end of the second switch SW2 can be connected between a first resonance capacitor C2-1 and a second resonance capacitor C2-2.

Through this configuration of the control circuit, the induction heating type cooktop 1 according to an embodiment of the present disclosure can control the current direction of the working coil WC by using the half-bridge inverter 60 and the switch SW. According to this embodiment, there is no need to provide an additional circuit to synchronize the inverter signal, which has the advantage of simplifying a product structure and reducing costs.

FIG. 17 is a circuit diagram of a cooktop according to a second embodiment of the present disclosure.

FIG. 17 illustrates an example in which a circuit for controlling a plurality of working coils is implemented as a full-bridge inverter and a coil switching circuit.

Similar to the circuit diagram of FIG. 16, a cooktop 1 can include a power supply V configured to provide AC power, a bridge diode BD configured to rectify the AC power of the power supply V into DC power, a DC link capacitor C1 configured to smooth the rectified direct current power, an inverter 60 configured to convert the rectified direct current power into resonance current through a switching operation to provide the resonance current to the working coil WC, a working coil WC configured to generate magnetic fields due to the resonance current, a switch SW configured to control the current direction of the working coil WC, and a resonance capacitor C2. For convenience of explanation, descriptions that are duplicated with those described in FIG. 16 will be omitted.

However, the inverter 60 can be implemented as a full-bridge.

Specifically, one end of the first working coil WC1 can be connected between the first switching element 60-1 and the second switching element 60-2, and the other end of the first working coil WC1 can be connected to the first switch SW1. One end of the second working coil WC2 can be connected to the first switch SW1, and the other end can be connected to the second switch SW2.

The second switch SW2 can have one end connected to the second working coil WC2 and the other end connected to the resonance capacitor C2. The resonance capacitor C2 can have one end connected to the second switch SW2 and the other end connected between a third switching element 60-3 and a fourth switching element 60-4.

The first switch SW1 and the second switch SW2 can be in contact with a contact point 1 or a contact point 2 at the same time by a control signal of the controller 193.

For example, when the first switch SW1 and the second switch SW2 are connected to the contact point 1, the current passing through the first working coil WC1 in the clockwise direction can pass through the second working coil WC2 along the contact point 1 connected to the first working coil WC1 in the counterclockwise direction to move along the contact point 1 connected to the second switch SW2.

For example, when the first switch SW1 and the second switch SW2 are in contact with the contact point 1 at the same time, directions of the current flowing through the first working coil WC1 and the second working coil WC2 can be opposite to each other.

When the first switch SW1 and the second switch SW2 are connected to the contact point 2 at the same time, the current passing through the first working coil WC1 in the clockwise direction can pass through the second working coil WC2 along the contact point 2 connected to the first working coil WC1 in the clockwise direction to move along the contact point 2 of the second switch SW2.

For example, when the first switch SW1 and the second switch SW2 are in contact with the contact point 1 at the same time, the current flowing through the first working coil WC1 and the second working coil WC2 can be flowing in the same direction.

One end of the second switch SW2 can be in contact with the contact point 1 or the contact point 2 and then be connected to the second working coil WC2, and the other end of the second switch SW2 can be connected between a first resonance capacitor C2-1 and a second resonance capacitor C2-2.

Through this configuration of the control circuit, the induction heating type cooktop 1 according to an embodiment of the present disclosure can control the current direction of the working coil WC by using the full-bridge inverter 60 and the switch SW. According to this embodiment, there is no need to provide an additional circuit to synchronize the inverter signal, which has the advantage of simplifying a product structure and reducing costs.

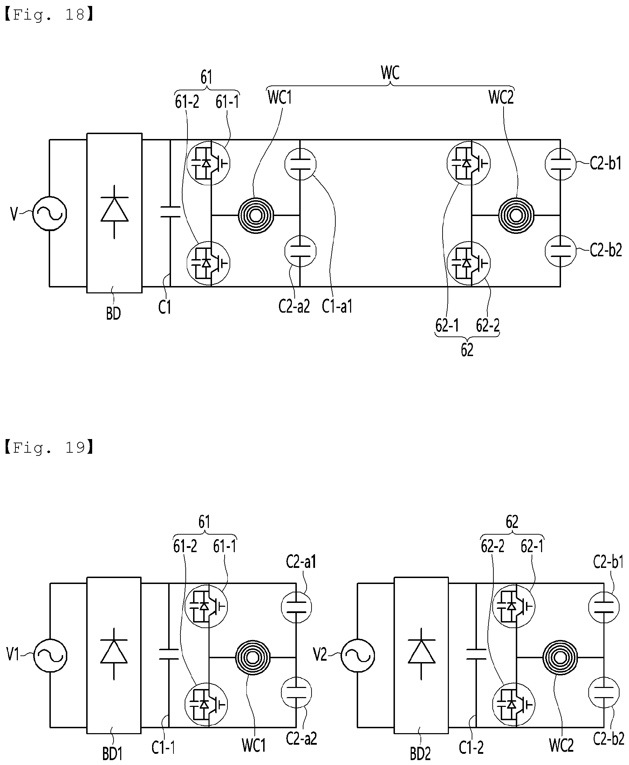

FIG. 18 is a circuit diagram of a cooktop according to a third embodiment of the present disclosure.

FIG. 18 illustrates an example in which a circuit for controlling a plurality of working coils is implemented as two half-bridge inverter circuits.

According to the third embodiment, an inverter 60 can include a first inverter 61 and a second inverter 62. For example, the inverter 60 can be implemented with two half-bridges.

One end of the first working coil WC1 can be connected between a first switching element 61-1 of the first inverter 61 and a second switching element 61-2 of the first inverter 61, and the other end of the first working coil WC1 can be connected between a first resonance capacitor C2-a1 and a second resonance capacitor C2-a2.

One end of the second working coil WC2 can be connected between a first switching element 62-1 of the second inverter 62 and a second switching element 62-2 of the second inverter 62, and the other end of the second working coil WC2 can be connected between a third resonance capacitor C2-b1 and a fourth resonance capacitor C2-b2.

For example, a controller 193 can control each of the first inverter 61 connected to the first working coil WC1 and the second inverter 62 connected to the second working coil WC2 so that directions of current flowing through the first working coil WC1 and the second working coil WC2 are the same or different from other. In addition, the controller 193 can control the first inverter 61 or the second inverter 62 so that the current flowing through the first working coil WC1 or the second working coil WC2 is 0 and also can more precisely control a magnetic field region of the working coil WC when compared to a situation in which a single inverter is used.

According to the third embodiment, the cooktop 1 can precisely control the direction of the current flowing through the first working coil WC1 and the direction of the current flowing through the second working coil WC2, and thus, there is an advantage of variously controlling a magnetic field concentration area.

FIG. 19 is a circuit diagram of a cooktop according to a fourth embodiment of the present disclosure.

FIG. 19 illustrates an example in which a circuit for controlling a plurality of working coils is implemented as two inverter circuits driven by separate bridge diodes.

According to the fourth embodiment, a cooktop 1 can be configured to be driven through a plurality of inverters having separate bridge diodes BD.

Referring to FIG. 19, a control circuit of a first working coil WC1 can include a first power supply V1, a first bridge diode BD1, a first DC link capacitor C1-1, a first inverter 61, and first and second resonance capacitors C2-a1 and C2-a2.

A control circuit of the second working coil WC1 can include a second power supply V1, a second bridge diode BD2, a second DC link capacitor C1-2, a second inverter 62, and third and fourth resonance capacitors C2-b1 and C2-b2.

For example, the control circuit of the first working coil WC1 and the control circuit of the second working coil WC2 can be provided separately.

According to the configuration of the control circuit of FIG. 19, AC power supplied from the first power supply V1 and the second power supply V2 can be rectified into DC power through the first bridge diode BD1 and the second bridge diode BD2 to provide separate resonance current to the first working coil WC1 and the second working coil WC2 by the switching operation of the first inverter 61 and the second inverter 62, respectively.

As described above, a controller 193 can control each of the first inverter 61 connected to the first working coil WC1 and the second inverter 62 connected to the second working coil WC2 so that current flowing through the first working coil WC1 and the second working coil WC2 flow in the same direction or flow in different directions.

A control circuit according to the fourth embodiment can increase in input voltage applied to the working coil WC through a configuration with the separate bridge diode (BD). Therefore, there is an advantage of increasing in output of the working coil WC.

In addition, as illustrated in FIGS. 18 and 19, when the cooktop 1 is individually provided with the inverter for each of the plurality of working coils, a phase between the coils can be controlled to any phase between 0 degrees and 180 degrees. There is an advantage in that the direction of the current flowing through each of the plurality of working coils is controlled by turning each coil on or off.

As in the first to fourth embodiments described above, the cooktop 1 can be implemented to include the control circuit capable of controlling the current directions of the plurality of working coils, for example the first working coil WC1 and the second working coil WC2, to be the same or different from each other. However, since the above-described first to fourth embodiments are merely examples for convenience of explanation, it is reasonable that the embodiments are not limited thereto.

According to the present disclosure, the cooktop 1 according to an embodiment of the present disclosure can adjust an amount of heat generated in the intermediate heating element IM according to the type of object HO to be heated through a phase control method of the plurality of coils, and pattern and shape designs of intermediate heating element IM. Thus, although the cooktop 1 is driven by the induction heating method, it can have the advantage of being able to heat both the magnetic type of cooking container and the non-magnetic type of cooking container.

In addition, the cooktop 1 can have the advantage of maximizing the heating performance for each type of cooking container because the magnetic fields are concentrated to the intermediate heating element IM or the cooking container, according to the type of cooking container.

Furthermore, when the cooktop 1 heats the magnetic type of cooking container, the magnetic fields coupled to the intermediate heating element IM can be minimized, and thus, the limitation in that the intermediate heating element IM and the upper plate 15 on which the intermediate heating element IM is installed becomes hot can be minimized.

The above-disclosed subject matter is to be considered illustrative, and not restrictive, and the appended claims are intended to cover all such modifications, enhancements, and other embodiments, which fall within the true spirit and scope of the present disclosure.

Thus, the embodiment of the present disclosure is to be considered illustrative, and not restrictive, and the technical spirit of the present disclosure is not limited to the foregoing embodiment.

Therefore, the scope of the present disclosure is defined not by the detailed description of the invention but by the appended claims, and all differences within the scope will be construed as being included in the present disclosure

## Claims

1. An induction heating type cooktop comprising:
an upper plate on which an object to be heated is placed;
an intermediate heating element installed on the upper plate;
a first working coil and a second working coil configured to generate magnetic fields passing through at least the object to be heated or the intermediate heating element; and
an inverter configured to control a first direction of first current flowing through the first working coil and a second direction of second current flowing through the second working coil,
wherein an area of a loop generated by current induced by the intermediate heating element varies according to types of the object to be heated.

2. The induction heating type cooktop according to claim 1, wherein a first area of the loop generated in the intermediate heating element when the object to be heated is a magnetic body is less than a second area of a loop generated in the intermediate heating element when the object to be heated is a non-magnetic body.

3. The induction heating type cooktop according to claim 1, wherein the inverter is configured to control the first direction and the second direction so that the loop is changed in size.

4. The induction heating type cooktop according to claim 3, wherein a first size of the loop generated in the intermediate heating element when the first direction and the second direction are different from each other is less than a second size of the loop generated in the intermediate heating element when the first direction and the second direction are the same.

5. The induction heating type cooktop according to claim 4, wherein the inverter is driven:
so that the first direction and the second direction are different from each other when the object to be heated is a magnetic body; and
so that the first direction and the second direction are the same when the object to be heated is a non-magnetic body.

6. The induction heating type cooktop according to claim 1, wherein the first working coil and the second working coil are disposed side by side, and
the intermediate heating element has a ring shape.

7. The induction heating type cooktop according to claim 6, wherein a plurality of groove are defined around a hole defined at a central portion of the intermediate heating element.

8. The induction heating type cooktop according to claim 1, wherein one of the first working coil and the second working coil is disposed inside the other, and
the intermediate heating element has a ring shape, and a plurality of first grooves extending from an outer circumference and a plurality of second grooves extending from an inner circumference are alternately defined in the intermediate heating element.

9. The induction heating type cooktop according to claim 1, wherein the inverter is configured to control a phase difference between the first current and the second current to 0 degree or 180 degrees according to types of the object to be heated.

10. The induction heating type cooktop according to claim 1, wherein the number of loops generated in the intermediate heating element when the object to be heated is a magnetic body is greater than the number of loops generated in the intermediate heating element when the object to be heated is a non-magnetic body.

11. The induction heating type cooktop according to claim 1, wherein a direction of the current induced in the intermediate heating element by the first working coil and a direction of the current induced in the intermediate heating element by the second working coil are the same or different from each other.

12. The induction heating type cooktop according to claim 11, wherein, when the object to be heated is a magnetic body, the direction of the current induced in the intermediate heating element by the first working coil and the direction of the current induced in the intermediate heating element by the second working coil are different from each other, and
when the object to be heated is a non-magnetic body, the direction of the current induced in the intermediate heating element by the first working coil and the direction of the current induced in the intermediate heating element by the second working coil are the same.

13. The induction heating type cooktop according to claim 1, wherein the intermediate heating element has a thickness greater than a skin depth.

14. The induction heating type cooktop according to claim 1, wherein the intermediate heating element has a thickness less than a sink depth.

15. The induction heating type cooktop according to claim 1, further comprising at least one switch configured to control the directions of the first current and the second current.
